(19) Europäisches Patentamt
European Patent Office
Office européen des brevets

(11) **EP 1 025 595 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(51) Int Cl.:
**H01L 41/04** (2006.01)     **H02N 2/06** (2006.01)
**F02D 41/22** (2006.01)

(21) Anmeldenummer: **99939949.6**

(22) Anmeldetag: **25.06.1999**

(86) Internationale Anmeldenummer:
**PCT/DE1999/001856**

(87) Internationale Veröffentlichungsnummer:
**WO 1999/067527 (29.12.1999 Gazette 1999/52)**

(54) **VERFAHREN ZUM STEUERN EINES KAPAZITIVEN AKTORS**

METHOD FOR CONTROLLING A CAPACITIVE ACTUATOR

PROCEDE POUR COMMANDER UN ACTIONNEUR CAPACITIF

(84) Benannte Vertragsstaaten:
**DE FR GB**

(30) Priorität: **25.06.1998 DE 19828401**

(43) Veröffentlichungstag der Anmeldung:
**09.08.2000 Patentblatt 2000/32**

(73) Patentinhaber: **Continental Automotive GmbH 30165 Hannover (DE)**

(72) Erfinder:
• **HOFFMANN, Christian
D-93057 Regensburg (DE)**
• **FREUDENBERG, Hellmut
D-93080 Grossberg (DE)**
• **GERKEN, Hartmut
D-93152 Nittendorf (DE)**
• **HECKER, Martin
D-93336 Laimerstadt (DE)**
• **PIRKL, Richard
D-93053 Regensburg (DE)**

(56) Entgegenhaltungen:
| EP-A1- 0 611 881 | DE-A- 19 804 196 |
| DE-A1- 19 644 521 | DE-C1- 19 652 801 |
| US-A- 5 097 171 | US-A- 5 376 854 |
| US-A- 5 499 541 | US-A- 5 578 761 |

**Beschreibung**

Die Erfindung betrifft ein Verfahren zum Steuern eines kapazitiven Aktors, insbesondere eines piezoelektrischen Aktors für ein Kraftstoffeinspritzventil, gemäß dem Oberbegriff des Patentanspruchs 1.

Ein solches Verfahren und eine Anordnung zur Durchführung des Verfahrens ist in DE 196 44 521 A1 beschrieben. In diesem Verfahren wird einem kapazitiven Aktor eine vorgegebene Energie zugeführt. Dies geschieht durch definiertes Umladen eines Ladekondensators auf den Aktor, wobei der Ladekondensator von einem Anfangsspannungswert auf einen Endspannungswert entladen wird. Alternativ wird durch Messen der am Aktor fließenden bzw. anliegenden Strom- und Spannungswerte die auf den Aktor aufgebrachte Energie ermittelt.

Die DE 198 04 196 A1 beschreibt ein Verfahren zur Diagnose gekoppelter piezomechanischer Systeme, das die elektrischen Kennlinien der in den piezomechanischen Systemen enthaltenen Piezoelemente nutzt. Die in den elektrischen Kennlinien enthaltenen Informationen über den mechanischen Zustand des piezomechanischen Systems gestatten eine Diagnose, bei der Funktionsstörungen und Funktionsausfälle des piezomechanischen Systems erkannt werden können. Die Diagnose erfolgt durch Vergleich eines Spannungssignals oder eines Stromsignals mit ein oder mehreren Schwellwerten.

Die US 5,097,171 beschreibt ein Stoßdämpfersystem mit einer Antriebsvorrichtung für einen Piezoaktor. Die Antriebsvorrichtung umfasst eine Schaltung zur Erkennung von Störungen, die einen Lade- oder Entladestrom beobachtet und bei Unterschreiten eines festgelegten Grenzwerts auf einen Fehler schließt.

Die US 5,578,761 beschreibt einen piezoelektrischen Aktor mit einem System zur Zustandsüberwachung, das eine kontinuierliche Kontrolle der Kapazität des Piezoaktors vornimmt und aus einer plötzlichen Änderung der Kapazität auf das Vorliegen eines Fehlers schließt.

Die US 5,499,541 beschreibt eine Anordnung zur Erkennung eines Defekts in einem piezoelektrischen Kraftsensor. Hierzu wird entweder die Kapazität des Sensors oder dessen Spannungsantwort auf eine Testspannung beobachtete und bei Abweichung von einem erwarteten Verhalten auf das Vorliegen eines Fehlers geschlossen.

Die US 5,376,854 beschreibt eine Antriebsschaltung für ein piezoelektrisches Element, die eine Fehlererkennungseinheit umfasst. Zur Erkennung eines Fehlers wird eine elektrische Spannung bzw. ein elektrisches Potential an einem festgelegten Punkt der Schaltung beobachtet und mit einem Referenzwert verglichen. Wird ein Fehler erkannt, so wird ein Alarm ausgelöst.

Die EP 0 611 881 B1 beschreibt eine piezoelektrische Einspritzvorrichtung einer Brennkraftmaschine, bei der durch Temperaturänderungen bedingte Änderungen einer Kapazität eines piezoelektrischen Elements dadurch kompensiert werden, dass die auf das piezoelektrische Element aufgebrachte elektrische Ladung gemessen und durch Anpassung einer Ladespannung kontrolliert wird.

DE 196 52 801 C1 beschreibt ein kapazitives Stellglied, das mit definierter Ladespannung Uc geladen wird. Aus einem gespeicherten Kennfeld KF wird die momentane Stellgliedkapazität Cp aus Ladespannung Uc und Stellgliedspannung Up ermittelt und aus Ladespannung Uc und Stellgliedkapazität Cp wird die dem Stellglied zugeführte Energie E bestimmt. Entsprechend der Abweichung der dem Stellglied zugeführten Energie E von einem vorgegebenen Energiebetrag Ev wird die Ladespannung Uc für den nächsten Ansteuervorgang des Stellgliedes geregelt; der gleiche Vorgang ergibt sich für weitere Stellglieder.

In DE 196 44 521 A1 ist beschrieben, dass, um einen konstanten Hub ds eines kapazitiven Stellgliedes, beispielsweise für ein Kraftstoffeinspritzventil einer Brennkraftmaschine, in einem großen Temperaturbereich zu erzielen, das Stellglied geladen wird, indem ihm eine vorgegebene Energie zugeführt wird, d. h., ein Kondensator definiert entladen wird. Alternativ werden der dem Stellglied zugeführte Strom und die an ihm abfallende Spannung multipliziert, das Produkt integriert, und der Integralwert mit einem vorgegebenen Sollwert verglichen. Der Ladevorgang wird abgebrochen, wenn der Integralwert den Sollwert erreicht oder übersteigt.

Es ist Aufgabe der Erfindung, die Steuerung eines kapazitiven Aktors derart durchzuführen, dass eine Diagnose des Funktionszustandes eines Aktors oder eines Kraftstoffeinspritzventils erfolgt.

Die Aufgabe der Erfindung wird durch die im Patentanspruch 1 genannten Merkmale gelöst.

Ein Vorteil der Erfindung besteht darin, den Funktionszustand mit einfachen Mitteln schnell und sicher zu erkennen. Auch ermöglicht das erfindungsgemäße Verfahren, unterschiedliche Fehlerarten zu unterscheiden, z.B. ein nicht mehr öffnendes oder ein nicht mehr schließendes Kraftstoffeinspritzventil.

Die Erfindung geht von der Überlegung aus, aus einem auf den Aktor aufgebrachten Energiewert und einer am Aktor gemessenen Aktorspannung auf die Auslenkung des Aktors und damit auf den Funktionszustand des Aktors oder des Kraftstoffeinspritzventils zu schließen.

Weitere vorteilhafte Ausbildungen und Verbesserungen der Erfindung sind in den abhängigen Patentansprüchen angegeben.

Im folgenden wird die Erfindung anhand der Figuren näher erläutert; es zeigen:

Figur 1     ein Diagramm mit Aktorkennlinien,
Figur 2     eine Anordnung zum Steuern eines Aktors,
Figur 3     ein Flußdiagramm, betreffend die Arbeitsweise der Anordnung nach Figur 2.

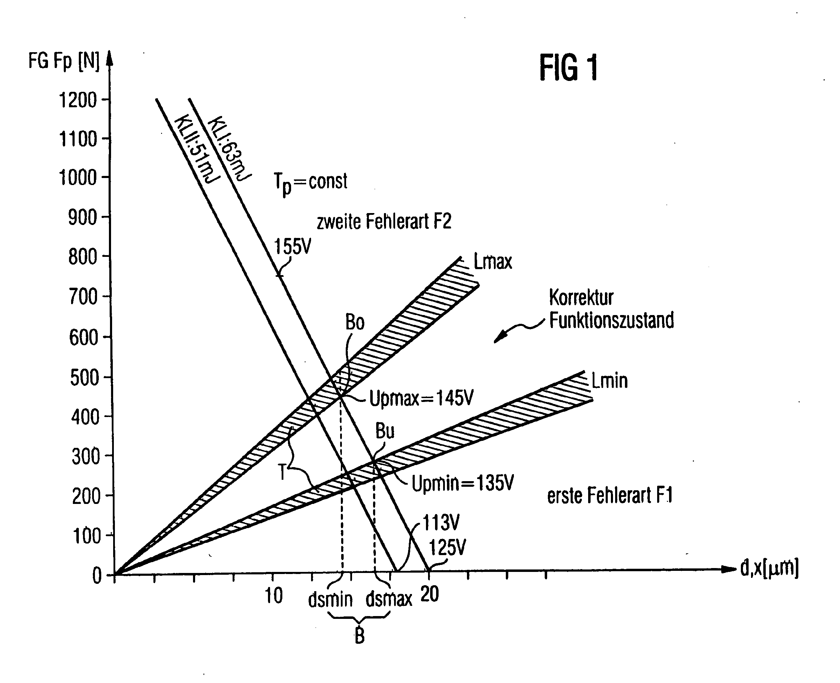

In Figur 1 ist ein Diagramm mit Aktorkennlinien und Lastlinien aufgeführt. Auf die Ordinate ist eine von einem Aktor P erzeugte Aktorkraft Fp und eine auf einen Lastkörper wirkende Lastkraft Fl aufgetragen. Ein Ausbildungsbeispiel eines Lastkörpers ist z.B. eine Düsennadel eines Kraftstoffeinspritzventils, die von einem Aktor P angesteuert wird. Auf die Abszisse ist ein Aktorhub ds eines Aktors P und eine Lastauslenkung x aufgetragen, um die ein Lastkörper durch die auf ihn wirkende Lastkraft Fl ausgelenkt wird.

Jede der dargestellten, durch den Nullpunkt gehenden Lastlinien, z.B. Lmin und Lmax, zeigt eine lineare Abhängigkeit der Lastauslenkung x von der Lastkraft Fl, wobei jeder Tastkörper durch seine Körperform und seine Federeigenschaften, z.B. einen hohlzylinderförmiger Metallkörper mit vorgegebenen Elastizitätsmodul, charakterisiert ist. Bei anderen Ausbildungsformen der Lastkörper treten nichtlineare Abhängigkeiten auf, z.B bei Lastkörpern, die aus mehreren übereinander geschichteten Körpern mit unterschiedlichen Elastizitätsmodulen bestehen, die wie in Serie geschaltete Federn mit unterschiedlichen Federkonstanten wirken oder z.B. bei dynamischen bewegten Lastkörpern.

Der Aktor P und der Lastkörper sind mechanisch miteinander verkoppelt, der Schnittpunkt einer Lastlinie mit einer Aktorkennlinie definiert somit einen Arbeitspunkt des Aktors P.

Jede der Aktorkennlinien KL I und KL II zeigt die für einen piezoelektrischen Aktor P typische Abhängigkeit der Aktorkraft Fp vom Aktorhub ds bei einer vorgegebenen, dem Aktor P zugeführten Energie E. Die Kennlienie KL I weist im Ausführungsbeispiel 63 mJ auf, die Kennlinie KL II 51 mJ. Die am Aktor P gemessene Aktorspannung Up ist abhängig vom Aktorhub ds und der Aktorkraft Fp. Der Aktor P weist z.B. bei einer auf den Aktor aufgebrachten Energie E=63 mJ bei einer gemessenen Aktorspannung Up=125 V einen Aktorhub von ds=20$\mu$m und eine Aktorkraft von Fp=0 N auf, wie anhand der Kennlinie KL I abzulesen ist.

Die in Figur 1 beispielhaft dargestellten Gesetzesmäßigkeiten werden in der Erfindung angewandt. Liegt der Aktorhub ds in einem vorgegebenen Band B mit einem unteren Bezugswert Bu und einem oberen Bezugswert Bo als unterer und oberer Rand des Bandes B, wird auf einen korrekten Funktionszustand des Aktors P oder des Kraftstoffeinspritzventils geschlossen. Die Ränder des Bandes entsprechen z.B. dem im Kraftstoffeinspritzventil zulässigen Minimalhub dsmin bzw. dem zulässigen Maximalhub dsmax. Liegt der Aktorhub ds außerhalb des Bandes B, wird auf einen Fehler der ersten Fehlerart F1 (ds > dsmax) bzw. der zweiten Fehlerart F2 (ds < dsmin) geschlossen. Der Aktorhub ds wird aus der gemessenen Aktorspannung Up aus einer der vorgegebenen Aktorkennlinien ermittelt.

Die Bezugswerte Bu und Bo stellen Arbeitspunkte des Aktors P dar und werden ermittelt, indem die für die Fehlerarten typischerweise auftretenden Lastkräfte Fl theoretisch oder experimentell simuliert werden und den so ermittelten Arbeitspunkten des Aktors P Bezugswerte zugeordnet werden.

Der Bereich der Ränder des Bandes B weist einen Toleranzbereich T auf, in welchem der Funktionszustand nicht sicher erkannt wird. Um eine sichere Diagnose des Funktionszustandes zu gewährleisten, werden die Ränder des Bandes B so gewählt, daß innerhalb des Bandes B ein korrekter Funktionszustand gewährleistet ist. Wird ein Aktorhub ds ermittelt, der außerhalb des Bandes B im Toleranzbereich T liegt, werden zusätzliche Meßgrößen M über den Betriebszustand aufgenommen, z.B. Motorgeräusche, die zusammen mit dem Aktorhub ds eine sichere Ermittlung des Funktionszustandes ermöglichen.

Die Unterteilung in eine erste Fehlerart F1, eine zweite Fehlerart F2 und weitere Fehlerarten ermöglicht eine grobe Klassifizierung der in einem Kraftstoffeinspritzventil auftretenden Fehlerarten. In einem Ausführungsbeispiel weist die erste Fehlerart Fl auf einen Bruch einer Aktorfeder hin und die zweite Fehlerart F2 auf ein Klemmen der an den Aktor P angeschlossenen Mechanik. Eine Unterteilung in weitere Fehlerarten wird durch jeweiliges Zuordnen von zusätzlichen Fehlerarten zu einem oder mehrerer, die Fehlerart charakterisierenden Bezugswerten erreicht.

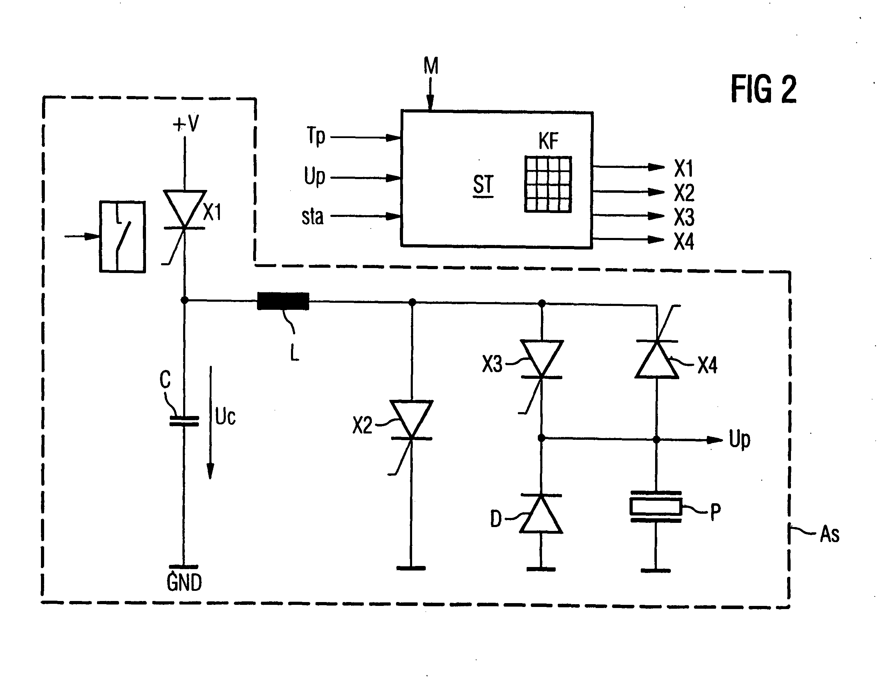

Die für das erfindungemäße Verfahren benötigten Aktorkennlinien, Bezugswerte und entsprechenden Fehlerarten werden experimentell ermittelt, z.B auf einem Motorprüfstand, und werden in einem Steuergerät ST (Figur 2) als Kennfeld KF angelegt. Alternativ kann das Verhalten des piezoelektrischen Aktors näherungsweise anhand eines Modells dargestellt werben, es gilt:

$$ds = f(k, E, Up)$$

ds     ist der Aktorhub des Aktors P,
E     ist die auf den Aktor P aufgebrachte Energie,
Up     ist die am Aktor gemessene Aktorspannung,
k     ist eine Aktorkonstante, die die mechanischen und elektrischen Eigenschaften des Aktors beschreibt.

Zusätzlich werden die in der Anordnung zum Steuern eines Aktors nach Figur 2 auftretenden Verluste in den Bauelementen gemessen und entsprechende Korrekturfaktoren zum Ausgleich der Verluste ermittelt und im Kennfeld KF gespeichert.

Da ein piezoelektrischer Aktor P temperaturabhängige Eigenschaften aufweist, ändert sich das in den Aktorkennlinien dargestellte Verhalten des Aktors P bei einer Änderung der Aktortemperatur Tp. Eine Temperaturkompensation erfolgt durch Anpassen der Bezugswerte mittels Korrekturfaktoren, die im Kennfeld KF abgespeichert sind.

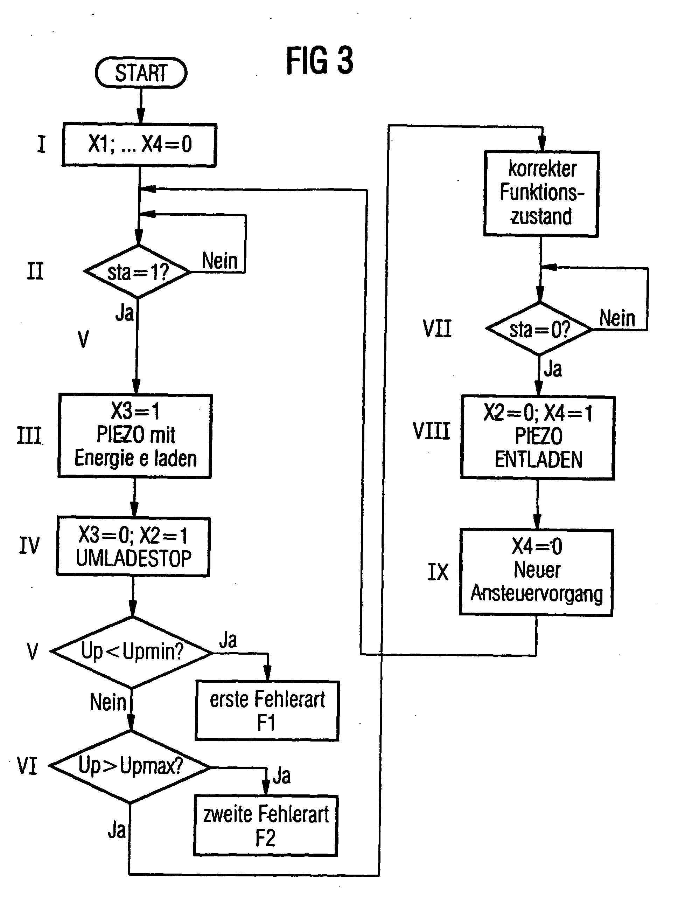

Das Kennfeld KF dient bei einem Steuervorgang nach Figur 3 als Datenbasis zur Durchführung des erfindungsgemäßen Verfahrens.

In Figur 2 ist eine Anordnung zum Steuern eines kapazitiven Aktors P nach dem Verfahren nach Figur 3 mit dem Steuergerät ST und einer daran angeschlossenen Ansteuerschaltung As dargestellt, wobei das Steuergerät ST Teil eines weiter nicht dargestellten mikroprozessorgesteuerten Motorsteuergerätes sein kann.

Die Ansteuerschaltung As weist einen Ladekondensator C auf, der über einen am Pluspol + liegenden Hauptschalter X1 mit einer Energiequelle V verbunden ist und dem eine Reihenschaltung aus einer mit dem Hauptschalter X1 verbundenen Umschwingspule L und einem mit dem Minuspol GND verbundenen Hilfsschalter X2 parallel liegt. Parallel zum Hilfsschalter X2 liegt eine Reiheneschaltung aus

- einer Parallelschaltung eines zur Umschwingspule L hin stromdurchlässigen Entladeschalters X4 und einer von der Umschwingspule L weg stromdurchlässigen Ladeschalters X3 und

- einer Parallelschaltung des Aktors P mit einer Diode D, die in Richtung zum Minuspol GND hin stromundurchlässig ist.

Das Steuergerät ST weist ein Kennfeld KF mit Aktorkennlinien und mit Korrekturfaktoren zum Ausgleich von temperaturbedingten Änderungen des Aktorverhaltens und zum Ausgleich der Verluste in der Ansteuerschaltung As auf. Das Steuergerät ST steuert die Schalter X1 bis X4 anhand eines intern ablaufenden, von Eingangssignalen abhängigen Programmes mit den in Figur 3 beschriebenen Arbeitsschritten, wobei dem Steuergerät ST als Eingangssignale die Aktorspannung Up, ein Ansteuersignal sta, die Meßgrößen M und die z.B. von einem Temperatursensor ermittelte Aktortemperatur Tp zugeführt wird.

Anhand des in Figur 3 gezeigten Flußdiagramms wird ein in der Anordnung nach Figur 2 ablaufender Ansteuervorgang beschrieben, ausgehend von einem Anfangszustand (Zustand I), in welchem sämtliche Schalter X1 bis X4 nichtleitend sind (symbolisiert im Flußdiagramm durch X1 bis X4=0) und die Umschwingspule L stromlos ist.

Mit Beginn des Steuersignals sta=1 (Zustand II) wird ein Ansteuervorgang ausgelöst, der den Aktor P mit einer vorgegebenen Energie E lädt (Zustand III). Dazu wird beispielsweise der auf eine Maximalspannung aufgeladene Ladekondensator C bis zum Erreichen einer Minimalspannung über die Umschwingspule L auf den Aktor P umgeladen. Dann wird der Umladevorgang beendet (Zustand IV) und die Aktorspannung Up gemessen, aus dessen Abweichung von Bezugswerten Upmin und Upmax auf den Funktionszustand des Aktors P oder des Kraftstoffeinspritzventils geschlossen wird. Unterschreitet die Aktorspannung Up den minimalen Bezugswert Upmin oder überschreitet sie den maximalen Bezugswert Upmax, wird auf die erste Fehlerart F1 (Zustand V) bzw. auf die zweite Fehlerart F2 geschlossen (Zustand VI). Liegt die Aktorspannung Up zwischen den Bezugswerten Upmin und Upmax, wird auf einen korrekten Funktionszustand geschlossen. Mit Ende des Steuersignals sta=0 (Zustand VII) wird der Aktor P entladen (Zustand VIII), worauf er bereit für einen neuen Ansteuervorgang ist (Zustand IX).

In einer weiteren Ausbildungsform der Erfindung werden während des Umladevorgangs und/oder des Entladevorgangs kontinuierlich oder zumindest zu einigen Zeitpunkten die aktuelle Energie E und die entsprechende Aktorspannung Up gemessen. Die Energie E kann z.B. durch Messen der Kondensatorspannung Uc oder durch Multiplikation des durch den Aktor P fließenden Stromwertes mit dem Wert der Aktorspannung Up und der Integration des Multiplikationsergebnisses über die Zeit des Auflade- oder Entladevorgangs ermittelt werden. Mehrere Messungen der Energie E und der Aktorspannung Up ermöglichen vorteilhaft eine schnelle und differenzierte Ermittlung des Funktionszustandes.

Zusätzlich besteht die Möglichkeit, die Aktorspannung Up nach dem Entladevorgang des Aktors P (Zustand VIII) zu messen. Überschreitet die Aktorspannung Up einen weiteren Bezugswert, wird auf eine weitere Fehlerart geschlossen, z.B. auf ein Klemmen des Aktors P im ausgelenkten Zustand. Der Entladevorgang ist nämlich zu kurz, um die internen Umladevorgänge im ausgelenkt bleibenden, hochohmigen Aktor P vollständig durchzuführen, daher verbleibt eine Restspannung auf dem Aktor P.

Die Temperaturabhängigkeit des Aktors P wird kompensiert, indem der untere Bezugswert Bu und der obere Bezugswert Bo oder andere Bezugswerte anhand der im Kennfeld KF des Steuergerätes ST abgelegten Korrekturfaktoren geändert werden.

Der Aktor P steuert in einem Kraftstoffeinspritzventil die Kraftstoffzufuhr in den Brennraum der Brennkraftmaschine. Das oben beschriebene Verfahren und die Anordnung zur Durchführung des Verfahrens nimmt somit vorteilhaft auch während des Betriebs einer Brennkraftmaschine bei jedem Einspritzvorgang Diagnosefunktionen wahr, wodurch im Fehlerfall schnell geeignete Gegenmaßnahmen eingeleitet werden können. Z.B. folgt beim ersten Fehlerfall F1, daß das Ventil nicht mehr schließt und Kraftstoff kontinuierlich in den Brennraum fließt. Durch Abschalten der Kraftstoffzufuhr des Zylinders mit dem fehlerhaften Kraftstoffeinspritzventil oder durch Abschalten mehrerer Zylinder zum Beibehalten eines vibrationsarmen Motorlaufes kann Schaden vom Motor abgewendet werden und das Fahrzeug aus eigener Kraft die nächste Werkstatt erreichen.

Zum Optimieren der Einspritzvorgänge in einem Kraftstoffeinspritzventil, z.B. in der Entwicklungs- oder Testphase, wird das erfindungsgemäße Verfahren eingesetzt, um dadurch vorteilhaft Rückschlüsse auf die internen Abläufe während eines Ansteuervorgangs zu ziehen. Weiterhin kann das Verfahren in der Fertigung am Bandende zur Endkontrolle eingesetzt werden.

Das erfindungsgemäße Verfahren kann auch in anderen Einsatzgebieten eingesetzt werden, z.B. zur Diagnose des Funktionszustandes in piezoelektrischen Stellmotoren.

**Patentansprüche**

1. Verfahren zum Steuern eines kapazitiven Aktors (P), insbesondere eines piezoelektrisch betriebenen Kraftstoffeinspritzventils einer Brennkraftmaschine, wobei eine auf den Aktor (P) aufgebrachte elektrische Energie (E) ermittelt wird, vorzugsweise durch Messen der Kondensatorspannung (Uc) eines Ladekondensators (C) einer Ansteuerschaltung (As) des Aktors (P) oder durch Multiplikation eines durch den Aktor (P) fließenden Stromwertes mit dem Wert einer am Aktor (P) anliegende Aktorspannung (Up) und der Integration des Multiplikationsergebnisses über die Zeit eines Auflade- oder Entladevorgangs des Aktors (P), und die dazugehörige, am Aktor (P) anliegende Aktorspannung (Up) gemessen wird, **dadurch gekennzeichnet, dass** aus der ermittelten Energie (E) und der Abweichung der gemessenen Aktorspannung (Up) von wenigstens einem Bezugswert (Bu; Bo) auf das Vorliegen eines korrekten oder fehlerhaften Funktionszustandes geschlossen wird.

2. Verfahren nach Anspruch 1, **dadurch gekennzeichnet, dass**

   - bei einer zwischen einem unterem Bezugswert (Bu) und einem oberen Bezugswert (Bo) liegenden Aktorspannung (Up) auf einen korrekten Funktionszustand,
   - bei einer den unteren Bezugswert (Bu) unterschreitenden Aktorspannung (Up) auf eine erste Fehlerart (F1), und
   - bei einer den oberen Bezugswert (Bo) überschreitenden Aktorspannung (Up) auf eine zweite Fehlerart (F2) geschlossen wird.

3. Verfahren nach einem der Ansprüche 1 oder 2, **dadurch gekennzeichnet, dass** mehrere Werte der Energie (E) und der dazugehörigen Aktorspannung (Up) ermittelt werden und aus ihnen auf einen Funktionszustand geschlossen wird.

4. Verfahren nach einem der Ansprüche 1 bis 3, **dadurch gekennzeichnet, dass** die Bezugswerte (Bu, Bo) in Abhängigkeit einer Aktortemperatur (Tp) geändert werden.

5. Verfahren nach einem der Ansprüche 1 bis 4, **dadurch gekennzeichnet, dass** den Fehlerarten zugeordnete Arbeitspunkte des Aktors (P) erfaßt werden und daraus Bezugswerte (Bu; Bo) ermittelt werden.

6. Verfahren nach einem der Ansprüche 1 bis 5, **dadurch gekennzeichnet, dass** aus zusätzlichen Messgrößen (M), insbesondere aus dem Eigengeräusch der Brennkraftmaschine, auf einen Funktionszustand geschlossen wird.

7. Verfahren nach einem der Ansprüche 1 bis 6, **dadurch gekennzeichnet, dass** aus der Energie (E) und der Aktorspannung (Up) auf einen Aktorhub (ds) geschlossen wird.

**Claims**

1. Method of controlling a capacitive actuator (P), in particular a piezoelectrically operated fuel injection valve of an internal combustion engine, wherein an electrical energy (E) applied to the actuator (P) is determined, preferably by measuring the capacitor voltage (Uc) of a charging capacitor (C) of a driving circuit (As) of the actuator (P) or by multiplication of a value of the current flowing through the actuator (P) by the value of an actuator voltage (Up) present at the actuator (P) and integration of the result of multiplication over the time of a charging or discharging operation of the actuator (P), and the associated actuator voltage (Up) present at the actuator (P) is measured, **characterized in that** the determined energy (E) and the deviation of the measured actuator voltage (Up) from at least one reference value (Bu; Bo) are used to infer the presence of a correct or a faulty functional state.

2. Method according to Claim 1, **characterized in that**,

   - with an actuator voltage (Up) lying between a lower reference value (Bu) and an upper reference value (Bo), a correct functional state is inferred,
   - with an actuator voltage (Up) falling below the lower reference value (Bu), a first type of fault (F1) is inferred and,
   - with an actuator voltage (Up) exceeding the upper reference value (Bo), a second type of fault (F2) is inferred.

3. Method according to either of Claims 1 and 2, **characterized in that** a plurality of values for the energy (E) and the associated actuator voltage (Up) are determined and used to infer a functional state.

4. Method according to one of Claims 1 to 3, **characterized in that** the reference values (Bu, Bo) are changed in dependence on an actuator temperature (Tp).

5. Method according to one of Claims 1 to 4, **characterized in that** operating points of the actuator (P) which are assigned to the types of faults are sensed and used to determine reference values (Bu; Bo).

6. Method according to one of Claims 1 to 5, **characterized in that** additional measured variables (M), in particular the intrinsic noise of the engine, are used to infer a functional state.

7. Method according to one of Claims 1 to 6, **characterized in that** the energy (E) and the actuator voltage (Up) are used to infer an actuator stroke (ds).

## Revendications

1. Procédé de commande d'un actionneur capacitif (P), plus particulièrement d'une soupape d'injection de carburant piézoélectrique d'un moteur à combustion interne,
une énergie électrique (E) appliquée à l'actionneur (P) étant déterminée de préférence en mesurant la tension de condensateur (Uc) d'un condensateur de charge (C) d'un circuit de commande (As) de l'actionneur (P) ou en multipliant une valeur de courant traversant l'actionneur (P) par la valeur d'une tension d'actionneur (Up) au niveau de l'actionneur (P) et en réalisant une intégration du résultat de la multiplication en fonction du temps d'un processus de charge ou de décharge de l'actionneur (P), et en mesurant la tension d'actionneur (Up) au niveau de l'actionneur (P),
**caractérisé en ce que**, à partir de l'énergie (E) déterminée et de l'écart entre la tension d'actionneur mesurée (Up) et au moins une valeur de référence (Bu ; Bo), il est possible de déduire la présence d'un état de fonctionnement correct ou erroné.

2. Procédé selon la revendication 1, **caractérisé en ce que**

   - dans le cas d'une tension d'actionneur (Up) existant entre une valeur de référence inférieure (Bu) et une valeur de référence supérieure (Bo), il est possible de déduire un état de fonctionnement correct,
   - dans le cas d'une tension d'actionneur (Up) inférieure à la valeur de référence inférieure (Bu), il est possible de déduire un premier type d'erreur (F1) et
   - dans le cas d'une tension d'actionneur (Up) supérieure à la valeur de référence supérieure (Bo), il est possible de déduire un deuxième type d'erreur (F2).

3. Procédé selon l'une des revendications 1 ou 2, **caractérisé en ce que** plusieurs valeurs de l'énergie (E) et de la tension d'actionneur (Up) correspondante sont déterminées et un état de fonctionnement en est déduit.

4. Procédé selon l'une des revendications 1 à 3, **caractérisé en ce que** les valeurs de référence (Bu, Bo) sont modifiées en fonction d'une température de l'actionneur (Tp).

5. Procédé selon l'une des revendications 1 à 4, **caractérisé en ce que** les points de fonctionnement correspondant aux types d'erreurs de l'actionneur (P) sont déterminés et des valeurs de référence (Bu ; Bo) en sont déduites.

6. Procédé selon l'une des revendications 1 à 5, **caractérisé en ce que**, à partir de valeurs de mesure (M) supplémentaires, plus particulièrement à partir du bruit propre au moteur à combustion interne, un état de fonctionnement est déduit.

7. Procédé selon l'une des revendications 1 à 6, **caractérisé en ce que**, à partir de l'énergie (E) et de la tension d'actionneur (Up), une course de l'actionneur (ds) est déduite.

## FIG 1

FG Fp [N]

1200
1100
1000
900
800
700
600
500
400
300
200
100
0

KLI:63mJ
KLII:51mJ

Tp=const
zweite Fehlerart F2

Korrektur
Funktionszustand

Lmax

Lmin

155V

Bo

Bu

Upmax=145V

Upmin=135V

113V
125V

T

dsmin dsmax 20

B

10

erste Fehlerart F1

d,x[μm]

FIG 2

EP 1 025 595 B1

# FIG 3

```
        ( START )
           │
           ▼
I    ┌──────────────┐
     │  X1; ... X4=0 │
     └──────────────┘
           │
           ▼
II      ◇ sta=1? ◇──── Nein
           │ Ja
           │
V          ▼
III  ┌──────────────┐
     │     X3=1      │
     │  PIEZO mit    │
     │ Energie e laden│
     └──────────────┘
           │
           ▼
IV   ┌──────────────┐
     │  X3=0; X2=1   │
     │  UMLADESTOP   │
     └──────────────┘
           │
           ▼
V     ◇ Up<Upmin? ◇──── Ja ──► ┌──────────────┐
           │ Nein              │ erste Fehlerart│
           │                   │      F1        │
           ▼                   └──────────────┘
VI    ◇ Up>Upmax? ◇──── Ja ──► ┌──────────────┐
           │ Ja                │ zweite Fehlerart│
           │                   │      F2        │
           │                   └──────────────┘
```

korrekter Funktions-zustand

VII     sta=0?   Nein / Ja

VIII    X2=0; X4=1 / PIEZO ENTLADEN

IX      X4=0 / Neuer Ansteuervorgang

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19644521 A1
- DE 19804196 A1
- US 5097171 A
- US 5578761 A
- US 5499541 A
- US 5376854 A
- EP 0611881 B1
- DE 19652801 C1